# EUROPÄISCHE PATENTSCHRIFT

(11) **EP 0 673 123 B1**
(45) Veröffentlichungstag und Bekanntmachung des Hinweises auf die Patenterteilung: **09.07.1997**
(21) Anmeldenummer: 95103271.3
(22) Anmeldetag: 07.03.1995
(51) Int. Cl.: H04B 1/00, H04M 1/04, H04M 1/72, B60R 11/02, H04B 1/38

(54) **Aufhäng- und Halteanordnung für ein tragbares Hand-Funkkommunikationsgerät**
Suspension and holding device for a portable handheld radio communication unit
Dispositif de suspension et maintien pour un appareil à main de radio communication portable

(30) Priorität: 14.03.1994 DE 9404179 U
(43) Veröffentlichungstag der Anmeldung: 20.09.1995
(73) Patentinhaber: telebox autotelefon-zubehör GmbH, 86899 Landsberg (DE)
(72) Erfinder: Müller, Gerhard, D-86935 Rott-Pessenhausen (DE)
(74) Vertreter: Grimm, Ekkehard, Dipl.-Phys.

(56) Entgegenhaltungen:
- GB-A- 2 196 210
- US-A- 4 957 264
- US-A- 5 052 943
- PATENT ABSTRACTS OF JAPAN vol. 012 no. 498 (E-698) ,24.Dezember 1988 & JP-A-63 209254 (FUJITSU LTD) 30.August 1988,
- PATENT ABSTRACTS OF JAPAN vol. 016 no. 230 (E-1208) ,27.Mai 1992 & JP-A-04 043746 (MATSUSHITA ELECTRIC IND CO LTD) 13.Februar 1992,
- PATENT ABSTRACTS OF JAPAN vol. 013 no. 139 (E-738) ,6.April 1989 & JP-A-63 302651 (FUJITSU LTD) 9.Dezember 1988,

## Beschreibung

Die Erfindung betrifft eine Aufhäng- und Halteanordnung für ein tragbares Hand-Funkkommunikationsgerät, insbesondere für ein Handtelefon, mit einer Aufnahme-Mulde, die durch etwa senkrecht zur Bodenfläche der Mulde verlaufende Seitenwände begrenzt ist, und mit einer Verriegelungseinrichtung, die einen in die Mulde vorspringenden Verriegelungszapfen und einen mit dem Verriegelungszapfen verbundenen Bedienungshebel aufweist, wobei der Bedienungshebel derart schwenkbar ist, daß er den Verriegelungszapfen zwischen einer Verriegelungsstellung und einer Lösestellung verschiebt.

Aufhäng- und Haltevorrichtungen der eingangs genannten Art werden insbesondere in Kraftfahrzeugen eingesetzt, um Hand-Funkkommunikationsgeräte, wie beispielsweise Handtelefone, bedienungsbereit in der Nähe des Fahrers zu positionieren. Solche Aufhäng- und Haltevorrichtungen sollen zum einen das Anzeige- und Bedienungsfeld gut sichtbar und zugänglich belassen, andererseits sollen sie ein leichtes Abnehmen des Handtelefons ermöglichen, um für eine Gesprächsführung das Gerät in die Hand nehmen zu können.

Eine Art einer Aufhäng- und Halteanordnung für ein tragbares Hand-Funkkommunikationsgerät ist aus dem DE-GM 93 16 700 bekannt. Hierbei handelt es sich um eine solche Anordnung, bei der an dem Handtelefon ein Geräte-Aufnahmeteil festgeklemmt wird, das mit einem beispielsweise an dem Armaturenbrett eines Fahrzeugs stationär verschraubbaren Befestigungsteil schwenkbar über ein Kugelgelenk verbunden ist. Das Handtelefon ist für die Aufhängung an dem Geräteaufnahmeteil mit einer Lasche versehen, die in eine entsprechende Einsatzöffnung an dem Befestigungsteil eingehängt wird. Eine solche Aufhänganordnung hat sich im Einsatz gut bewährt, insbesondere auch dahingehend, daß das aufgehängte Handtelefon über die Kugelgelenkanordnung in einer Vielfalt von Stellungen vom Fahrer oder Beifahrer gut sichtbar und greifbar positioniert werden kann. Um das Handtelefon abzunehmen, muß es nach oben verschoben werden, bis die Lasche aus dem Eingriff mit der Aufnahmeöffnung gelangt. Weiterhin muß eine entsprechende Lasche an dem jeweiligen Hand-Funkkommunikationsgerät angebracht werden, um das Handtelefon der Aufhäng- und Halteanordnung anzupassen.

Eine weitere Aufhäng- und Haltevorrichtung für ein tragbares Hand-Funkkommunikationsgerät ist aus dem DE-GM 93 03 114 bekannt. Diese Vorrichtung ist ebenfalls zweiteilig ausgebildet, wobei das eine Teil ein Formteil ist, das auf die Oberseite beispielsweise eines Handfunktelefons aufgeklemmt wird und daran fest verbleibt, das eine Lasche an der Rückseite aufweist, die in ein zweites, stationär gehaltenes Befestigungsteil lösbar eingehängt wird. Diese Halteanordnung bietet eine sichere Aufnahme des Handtelefons in dem Befestigungsteil; um das Telefon abzunehmen, muß es nach oben geführt werden, bis die Lasche aus der Halteöffnung freigegeben wird.

Eine Aufhäng- und Haltevorrichtung für ein tragbares Hand-Funkkommunikationsgerät der eingangs beschriebenen Art ist in Form eines festigungsteils bekannt, bei dem eine durch vier Seitenwände umschlossene Mulde gebildet ist, in die ein Zusatzakkumulator, der an die Rückseite eines bestimmten Handtelefons als zusätzliche Energieversorgungsquelle aufklemmbar ist, mit einem erweiterten Bereich eingelegt und verriegelt wird. Hierzu weist die Mulde an der in der festigungsstellung oberen Seitenwand einen Vorsprung auf, der in eine entsprechende Ausnehmung an dem Adapterteil des Handtelefons eingreift, wobei dann an der unteren, dem Vorsprung gegenüberliegenden Seitenfläche beim weiteren Eindrücken des Adapterteils in die Mulde ein weiterer Zapfen zurückgeschoben wird und federnd in einer entsprechenden Vertiefung einrastet. Dieser weitere Zapfen kann über einen kurzen Hebel zum Lösen des Handtelefons verschwenkt werden, wodurch der Zapfen aus dem Eingriff mit der Vertiefung des Handtelefons zurückgezogen und das Handtelefon freigegeben wird. Eine solche Aufhäng- und Haltevorrichtung ist aus dem JP-A- 63 209 254 bekannt.

Dieses Aufhängeteil hat einen gewissen Vorteil dahingehend, daß zur Benutzung des Handtelefons dieses an seinem unteren, über das Befestigungsteil vorstehenden Bereich mit der Hand ergriffen und der Hebel betätigt werden kann, um das Gerät abzunehmen. Mit einer solchen Halterung ist es nicht notwendig, zum Abnehmen das Telefon nach oben zu bewegen. Es hat sich allerdings gezeigt, daß diese Halterung nur eine begrenzte Sicherheit gegen ein versehentliches Lösen des Telefons aus der Halterung bietet. Dadurch, daß ein relativ langer Teil des Telefons über die Unterseite der Halterung vorsteht, können durch ein versehentliches Anstoßen an diesen vorstehenden Teil hohe Kräfte ausgeübt werden, die das Handtelefon, auch ohne Betätigung des Hebels, lösen.

Ausgehend von dem vorstehend angegebenen Stand der Technik liegt der vorliegenden Erfindung die Aufgabe zugrunde, eine Aufhäng- und Halteanordnung für ein tragbares Hand-Funkkommunikationsgerät, insbesondere für ein Handtelefon, der gattungsgemäßen Art anzugeben, die ein sicheres Halten des Handgeräts in der Halterung auch hinsichtlich eines ungewollten Berührens bietet und dennoch ein leichtes Abnehmen des Geräts gewährleistet sowie in weiterer Hinsicht bedienungsfreundlich ist.

Erfindungsgemäß wird diese Aufgabe dadurch gelöst, daß die Aufnahme-Mulde auf drei Seiten durch Seitenwände begrenzt ist und auf der Seite, auf der der Bedienungshebel vorsteht, offen ist, und daß die Seitenwände mindestens teilweise an ihren freien Enden übergreifende Vorsprünge aufweisen, die die Öffnungsweite der Mulde verringern.

Dadurch, daß die Mulde durch die übergreifenden Vorsprünge begrenzt ist, die das in die Mulde von deren in Befestigungsstellung unteren offenen Seite eingeführte Gerät auf dessen Oberseite umgreifen, ist das Gerät gegen ein Loslösen sicher gehalten. Die einzige Möglichkeit, dieses Gerät, beispielsweise ein Handtelefon, abzunehmen, ist dadurch gegeben, daß der Bedienungshebel betätigt wird, um den verschiebbaren Zapfen aus dem Eingriff mit dem Gerät zu lösen und das Gerät nach unten, zwischen den seitlichen Seitenwänden, die die Mulde begrenzen, und den das Gerät übergreifenden Vorsprüngen geführt, herauszunehmen. Je nach Länge der Vorsprünge kann die Freigabe des Geräts in Relation zu dem Weg, um den es verschoben werden muß, eingestellt werden.

Bevorzugt werden allerdings die Vorsprünge an den nach oben weisenden, freien Kanten der drei Seitenwände, die die Mulde begrenzen, umlaufend ausgebildet, so daß eine ausreichende Führung gegeben ist und außerdem die Haltekräfte über einen großen Bereich des Hand-Funkkommunikationsgeräts, das eingehängt ist, verteilt werden, so daß keine starken Druckstellen entstehen. Aus gleichem Grund ist es von Vorteil, die übergreifenden Vorsprünge an ihren der Bodenfläche zugewandten Seiten mit ebenen Führungsflächen auszubilden, die in einer Ebene etwa parallel zu der Ebene der Bodenfläche der Mulde verlaufen, die sich an einem Gehäuse bzw. einem Gehäuserand eines Hand-Funkkommunikationsgeräts anlegen.

Um auch ein Hand-Funkkommunikationsgerät mit interner Antenne, d.h. mit gerätebauseitiger Antenne, betreiben zu können, ist die Seitenwand, die der Öffnung, von der aus das Handgerät in die Aufnahme-Mulde eingeführt wird, mit einer Aussparung versehen, durch die eine entsprechende Antenne beim Einsetzen des Handgeräts hindurchführt. Außerdem kann eine solche Aussparung auch dann dienlich sein, wenn eine Antenne an der Oberseite eines Handgeräts mit ihrem Antennenfuß vorsteht.

Im Boden der Mulde der Aufhäng- und Halteanordnung können Befestigungsöffnungen vorgesehen werden, mittels derer die Anordnung stationär angeschraubt wird. Die Befestigungsöffnungen können mit entsprechenden Vertiefungen in der Bodenfläche versehen sein, um beispielsweise Schraubenköpfe oder andere Befestigungsteile so aufzunehmen, daß sie nicht über die Bodenfläche der Mulde vorstehen.

Um einen möglichst großen Hebelweg hinter dem in der Aufhäng- und Halteanordnung engehängten Hand-Funktgerät zu erhalten, ist es von Vorteil, den Bedienungshebel in Form eines Flächenelements auszubilden, das zu der durch die Rückseite der Bodenfläche der Mulde aufgespannten Fläche, die die Befestigungsfläche auf der Rückseite der Anordnung bildet, hin gewölbt ist. Zum einen wird hierdurch im Bereich des Ansatzpunkts des Hebels an der Anordnung ein relativ großer Freiraum zu der Befestigungswand hin gebildet, so daß ein Benutzer mit den Fingern hinter diesen Hebel greifen kann, zum anderen kann das von dem Handtelefon weggewölbte Ende einen ausreichenden Hebelarm bieten, mit dem der Hebel so verschwenkt werden kann, um den Zapfen, mit dem das Handfunktelefon in der Mulde verriegelt ist, aus seinem Eingriff zu lösen.

Es ist ersichtlich, daß für unterschiedliche Hand-Funkkommunikationsgeräte, die in einer solchen Aufhäng- und Halteanordnung aufgenommen werden sollen, verschiedene Verriegelungsteile notwendig sein können, die mit entsprechenden, vorstehenden Teilen oder Hinterschneidungen an dem Handgerät in Eingriff treten, um es zu verriegeln. Ein einfacher, konstruktiver Aufbau und eine entsprechende, einfache Lagerung des Bedienungshebels ist durch zwei Lager gegeben, die jeweils durch einen Zapfen gebildet werden, der in eine entsprechende Lagerausnehmung eingreift. Um einen solchen Bedienungshebel ohne größere Montagearbeit in die Aufhäng- und Halteanordnung einsetzen zu können, ist es von Vorteil, zwei Zapfen an dem Bedienungshebel vorzusehen, die in Lagerausnehmungen in den Seitenwänden eingreifen. Beispielsweise können solche Zapfen in Bohrungen gelagert werden, aus denen sie mittels einer in die Bohrung eingesetzte Spiralfeder herausgedrückt und in Eingriff mit den Lagerausnehmungen gehalten werden.

In einer besonders bevorzugten und vorteilhaften Ausgestaltung sind die Lagerausnehmungen durch jeweilige, gekrümmte Nuten gebildet, die zu den die Ausführöffnung für das Handgerät begrenzenden Stirnseiten der Seitenwände hin offen sind, so daß von dort aus feststehende Zapfen an dem Bedienungshebel in die Nuten eingeführt werden können. Die Nuten sind daran anschließend nach oben, etwa senkrecht zu der Bodenfläche der Mulde, gekrümmt, so daß der Hebel in Einführrichtung nicht lösbar ist, wobei der Hebel in der Stellung, in dem die Zapfen am hinteren Ende der Nuten anliegen, durch eine Feder gehalten wird. Eine solche Feder greift vorzugsweise an den Verriegelungszapfen an und drückt gegen den Verriegelungszapfen etwa senkrecht zur Bodenfläche der Mulde. Eine solche Feder, vorzugsweise eine Spiralfeder, kann über einen kurzen Haltezapfen an dem Bedienungshebel und/oder der Bodenfläche der Mulde aufgesteckt gehalten werden, so daß sie nicht aus der Anordnung herausfällt.

Insbesondere in Kraftfahrzeugen ist es üblich, das Gerät, d.h. das Handtelefon, an die Stromversorgung des Kraftfahrzeugs anzuschließen, um das Handtelefon extern mit Strom zu versorgen und den geräteseitigen Akkumulator zu schonen bzw. aufzuladen. Da es sehr wichtig ist, den Fahrzeugführer durch die Handhabung des Geräts nicht abzulenken, ist ein Adapterteil von Vorteil, das an die Anordnung im Bereich der offenen Seite der Aufnahme-Mulde befestigt werden kann, das mit einem oder mehreren elektrischen Kontaktteilen versehen ist. Dieses Adapterteil ist in seiner Stellung so veränderbar, daß es in der Verriegelungsstellung des Bedienungshebels in eine Kontaktierungsstellung überführt wird. Dies bedeutet, daß mit einem Einsetzen des Handtelefons in die Anordnung das Adapterteil, vorzugsweise sebsttätig unter der Wirkung eines Adapterteil-Federerelements, in die Kontaktierungsstellung überführt wird, in der ein Kontakt mit den Anschlußelementen des Handtelefons und damit zu der Stromversorgung und ggf. auch zu einer externen Außenantenne des Fahrzeugs hergestellt wird. Ein Federelement kann hierbei so vorgesehen werden, daß das Adapterteil aus der Kontaktierungsstellung in eine Freigabeposition durch Verschieben des Bedienungshebels von der Verriegelungsstellung zu der Lösestellung, also dann, wenn das Gerät aus der Halteanordnung entnommen werden soll, freigegeben wird. Gleichzeitig wird das Adapterteil-Federelement wieder gespannt, d.h. unter Druck gesetzt, um das Adapterteil in eine Bereitschaftsstellung zu versetzen, von der es ausgehend beim Einsetzen des Handtelefons in die Anordnung wieder in seine Kontaktierungsstellung überführt wird. Ein solches Adapterteil kann gleichzeitig dazu dienen, das Gerät in der Anordnung an seiner Unterseite zu verriegeln, so daß zusätzlich zu den Verriegelungszapfen eine Sicherung des Geräts an der Halteanordnung vorgenommen wird. Um das Adapterteil von der Kontaktierungsstellung zu einer Freigabeposition zu verschieben, greift vorzugsweise der Bedienungshebel in einen Schwenkarm des Adapterteils ein; über einen solchen Schwenkarm und der geeigneten Positionierung von Federelementen kann die notwendige Kraft, die dazu erforderlich ist, das Adapterteil aus seiner Kontaktierungsstellung zu lösen, eingestellt werden.

Weitere Vorteile und Merkmale der Erfindung ergeben sich aus der nachfolgenden Beschreibung eines Ausführungsbeispiels anhand der Zeichnung. In der Zeichnung zeigt:
- Figur 1: eine schematische Seitenansicht einer Aufhäng- und Halteanordnung mit einem angedeuteten, in die Anordnung eingehängten Handtelefon,
- Figur 2: eine perspektivische Ansicht der Aufhäng- und Halteanordnung nach Figur 1 ohne Handtelefon in einer horizontal gedrehten Ausrichtung, so daß der Innenbereich der Mulde sichtbar ist,
- Figur 3: die Anordnung nach Figur 2 mit einem herausgenommenen Bedienungshebel,
- Figur 4: eine Seitenansicht des Bedienungshebels der Ausführungsform der Figuren 1 bis 3,
- Figur 5: eine Draufsicht auf den Bedienungshebel aus Sicht des Pfeils V in Figur 4, und
- Figur 6: eine perspektivische Ansicht seitlich von unten auf den Bedienungshebel der Figuren 4 und 5.
- Fig. 7: eine Seitenansicht einer Anordnung ähnlich der Figuren 1 bis 6, bei der ein zusätzliches Adapterteil, das im Schnitt dargestellt ist, befestigt ist;
- Fig. 8: die Anordnung nach der Figur 9 mit eingesetztem Handtelefon und in die Kontaktierungsstellung überführtem Adapterteil, und
- Fig. 9: eine Explosionsansicht des Adapterteils mit seinen wesentlichen Einzelteilen.

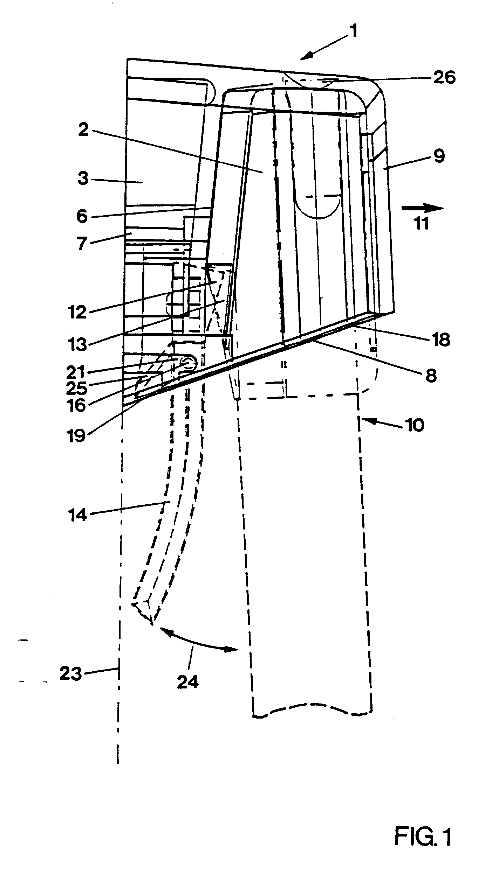

Wie die Figuren 1 bis 3 zeigen, weist die Aufhäng- und Halteanordnung 1 ("Anordnung 1") eine Aufnahme-Mulde 2 auf, die durch drei Seitenwände 3, 4, 5 begrenzt ist, die sich senkrecht zu einer Bodenfläche 6 erstrecken. Die Bodenfläche 6 der Mulde 2 besitzt zwei Befestigungsöffnungen 7, an denen sie mittels nicht dargestellten Schraub- oder anderen Verankerungselementen stationär in einer Stellung einbaubar ist, wie dies in Figur 1 dargestellt ist. In dieser Stellung weist eine offene Seite 8 der Mulde 2 nach unten. An den oberen, freien Kanten der Seitenwände 3, 4 und 5 sind umlaufende Vorsprünge 9 ausgebildet, die die Öffnungsweite der Mulde 2 an dieser oberen Kante der Seitenwände 3, 4 und 5 verringern. Von der offenen Seite 8 aus wird in die Anordnung 1 in der stationären Anordnung, wie sie in Figur 1 dargestellt ist, von unten ein Hand-Funkkommunikationsgerät, beispielsweise ein Handtelefon 10, das angedeutet dargestellt ist, eingeschoben, wobei die umlaufenden Vorsprünge 9 an dem Gehäuse des Handtelefons 1 zur Anlage gelangen und dieses führen und gegen ein Lösen in Richtung des Pfeils 11 halten.

In einer vollständig in die Mulde 2 eingeschobenen Stellung des Handtelefons 10 greift ein Verriegelungszapfen 12 in eine Ausnehmung oder Vertiefung 13 auf der Rückseite des Handtelefons 10 ein, so daß das Handtelefon 10 in der eingeschobenen Stellung verriegelt ist. Der Verriegelungszapfen 12 ist einstückig mit einem Bedienungshebel 14 verbunden, der nach unten aus der Anordnung 1 vorsteht. Bei dem Bedienungshebel 14 handelt es sich um ein längliches Flächenelement, das von dem Handtelefon 10 weg nach unten zu der Befestigungsseite bzw. der Ebene der Rückseite der Bodenfläche 6 hin gekrümmt ist.

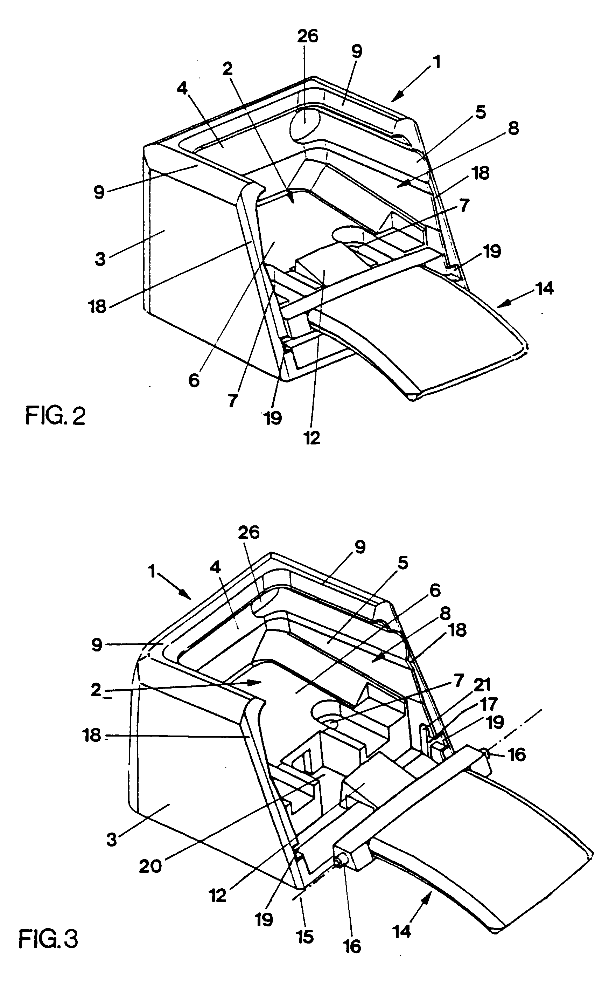

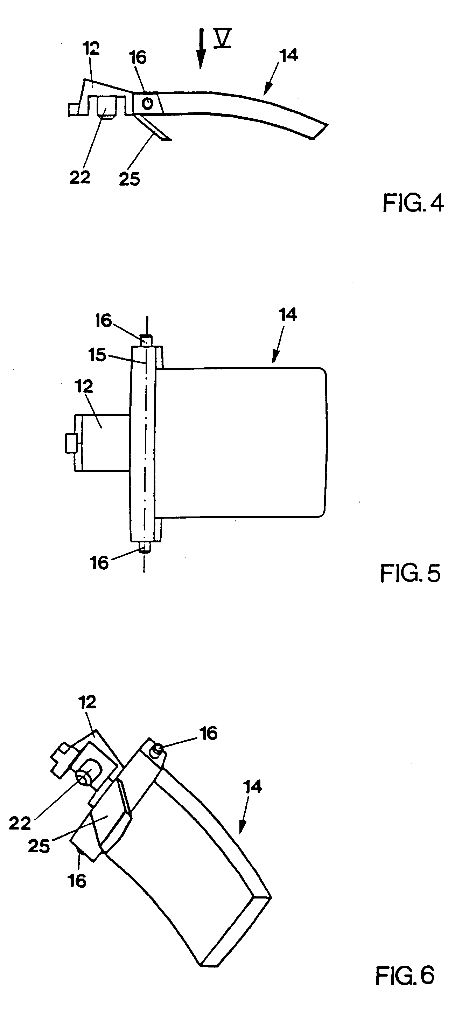

Der Bedienungshebel 14 weist weiterhin im Übergangsbereich zu dem Verriegelungszapfen 12 hin eine Schwenkachse, durch die unterbrochene Linie 5 in Figur 3 angedeutet, auf, die durch zwei Zapfen 16 festgelegt ist. Diese Zapfen 16 greifen in jeweils zugeordnete Nuten 17 ein, die zur vorderen Stirnseite 18 jeweils der Seitenwände 3 und 5 hin offen sind und so ein Einführende 19 aufweisen. Das Bedienungsteil 14 wird ausgehend von einer Stellung, die in Figur 3 dargestellt ist, mit den Zapfen 16 in die Einführenden 19 der Nuten 17 eingesetzt, nach hinten geschoben und über eine zuvor unterhalb des Verriegelungszapfens 12 angeordneten Spiralfeder, die sich in eine Vertiefung 20 einsetzt, nach oben gedrückt, so daß die beiden Zapfen 16 in senkrecht zu der Bodenfläche 6 verlaufenden Endbereichen 21 der Nuten 17 zur Anlage gelangen. Die Spiralfeder wird an der Unterseite des Verriegelungszapfens 12 an einem Haltezapfen 22 gelagert, wie er insbesondere in den Figuren 4 und 6 zu sehen ist. Zum einen bewirkt die Spiralfeder, daß der Bedienungshebel 14 mit dem Verriegelungszapfen 12 in der Anordnung 1 in der eingebauten Stellung gehalten wird, zum anderen drückt sie den Verriegelungszapfen 12 in eine Stellung, in der er in eine Ausnehmung 13 eines Handtelefons einrastet, wie dies in Figur 1 gezeigt ist.

Die Lagerung des Bedienungshebels 14 über die Zapfen 16 in den Nuten 17 bietet eine leicht auswechselbare Halterung des Bedienungselements 10. Um unterschiedliche Bedienungselemente in die Anordnung 1 einzusetzen zu können bzw. ein eingesetztes Bedienungselement daraus zu lösen, wird das Bedienungselement gegen den Druck der Spiralfeder nach unten gedrückt, bis die Zapfen von dem Endbereich 21 der Nut 7 in den horizontalen Bereich gelangen und aus dem Einführende 19 herausgezogen werden können. Es ist ersichtlich, daß durch unterschiedliche Bedienungshebel 14 mit unterschiedlichen Verriegelungszapfen 12 die Anordnung verschiedenen Hand-Funkkommunikationsgeräten, die in die Anordnung 1 eingesetzt bzw. dort aufgehängt werden sollen, in einfacher Weise angepaßt werden kann.

In der eingebauten Stellung, die die Figur 1 zeigt, hängt der Bedienungshebel 14 nach unten, wobei er im Bereich seiner Lagerung einen gewissen Abstand von einer Befestigungswand, durch die Linie 23 angedeutet, besitzt, so daß der Benutzer zur Abnahme des Handtelefons 10 unter den Hebel greifen kann und gleichzeitig das Handtelefon 10 an dem unteren Ende hält. An dem unteren Ende des Bedienungshebels 14 ist dieser sehr weit zu der Befestigungswand 23 hin gebogen, so daß er um einen relativ großen Bereich in Richtung des Pfeils 24 geschwenkt werden kann, um den Verriegelungszapfen 12 aus dem Eingriff mit der Ausnehmung 13 zurückzuziehen.

Wie insbesondere in den Figuren 4 und 6 bzw. ebenfalls in Figur 1 zu sehen ist, ist an der Unterseite des Bedienungshebels 14 ein Anschlagteil 25 angesetzt, das an der Bodenfläche 6 der Mulde 2 in der Verriegelungsstellung anliegt und eine weitere Verschwenkung des Bedienungshebels 14 gegen den Druck der nicht dargestellten Spirlafeder verhindert. Unterschiedliche, in die Anordnung 1 eingesetzte Bedienungshebel 14 können mit unterschiedlich geneigten bzw. unterschiedlich langen Anschlagteilen 25 versehen werden, um zusätzlich den Schwenkbereich des Hebels den einzelnen Geräten und den Anforderungen anzupassen.

Um auch Hand-Funkkommunikationsgeräte in die Anordnung 1 ansetzen zu können, die an ihrer Oberseite eine Antenne aufweisen, ist eine als Antennendurchführung dienende Aussparung 26 in der oberen Seitenwand 4 vorgesehen, durch die eine geräteseitige Antenne hindurchgeführt werden kann. In dem gezeigten Beispiel ist diese Aussparung eine kreisrunde Öffnung; es ist jedoch auch die Möglichkeit gegeben, den gesamten Flächenbereich der Seitenwand 4 mit einer größeren Aussparung zu versehen, um die von Gerät zu Gerät unterschiedlich positionierten Antennen hindurchführen zu können.

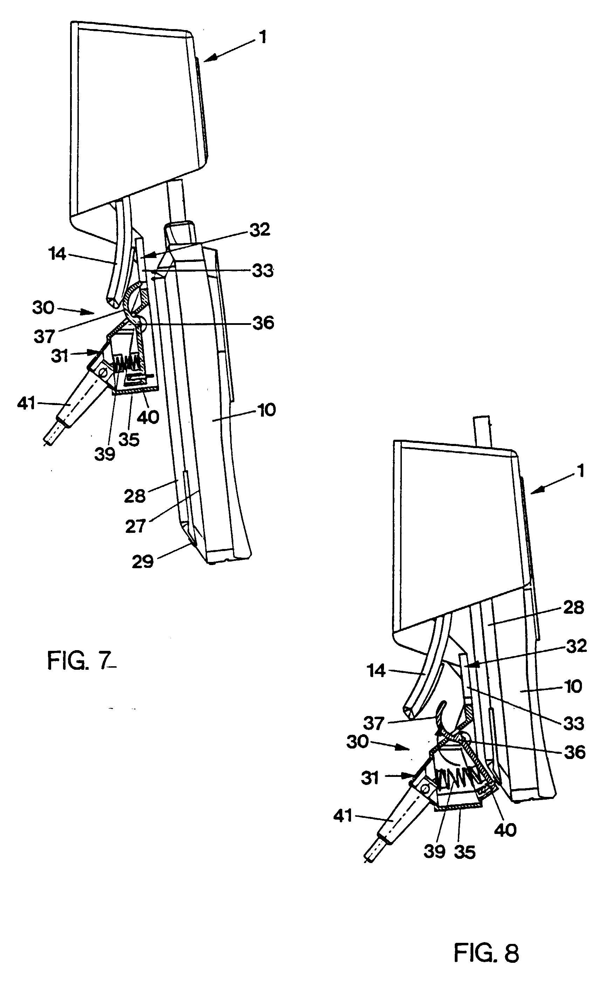

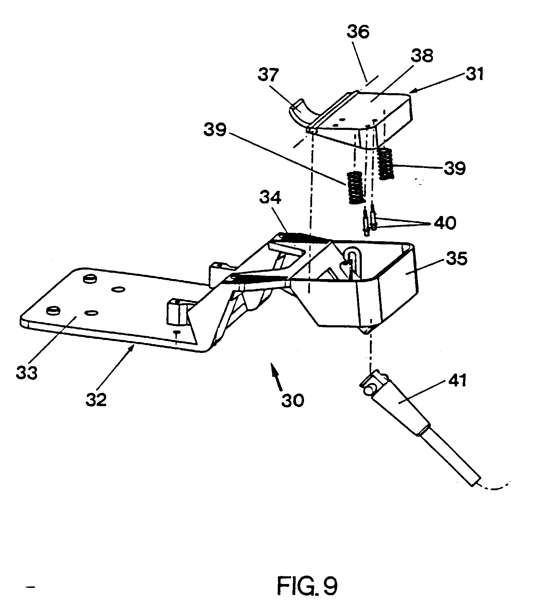

Insbesondere während eines Bereitschaftsbetriebs eines Hand-Funkkommunikationsgeräts, beispielsweise eines Handtelefons 10, ist es erwünscht, um den Akkumulator 28 des Geräts, der an dessen Unterseite 27 angeklemmt ist, nicht zu entladen bzw. gleichzeitig aufzuladen, der in den Figuren 7 und 8 zu sehen ist, das Handtelefon 10 an das Bordnetz, z.B. eines Kraftfahrzeugs, anzuschließen. Üblicherweise müssen hierzu Verbindungskabel über eine Steckverbindung an der Unterseite in die entsprechenden Anschlußbuchsen 29 des Handtelefons 10 eingesteckt werden, so daß hierzu von dem Benutzer des Handtelefons besondere Handgriffe erforderlich sind. In den Figuren 9 bis 11 ist eine Versorgungsanordnung 30 dargestellt, mit der die Anordnung 1, wie sie vorstehend beschrieben ist, ergänzt werden kann. Diese Versorgungsanordnung 30 weist ein Adapterteil 31 auf, das einen Träger 32 mit einer Halteplatte 33, die über entsprechende Befestigungsteile an der Befestigungsplatte der Anordnung 1 angeschraubt werden kann, besitzt, so daß sie von der Unterseite der Anordnung 1 mit dem Adapterteil 31 vorsteht. Der Träger 32 verläuft zu dem Adaperteil 31 hin L-förmig, wie die Figur 9 zeigt, so daß die Oberseite 34 des Endbereichs der Trägers 32 im wesentlichen in der Ebene der Bodenfläche 6 der Anordnung 1 verläuft. Das Adapterteil 31 ist schwenkbar in einem Adaptergehäuse 35, in dem der Träger 32 an seinem Ende übergeht, um eine Schwenkachse 36 schwenkbar gehalten, so daß es sich zwischen den beiden Stellungen, die in den Figuren 7 und 8 dargestellt sind, um die Schwenkachse 36 schwenken kann. Auf der dem Adapterteil 31 gegenüberliegenden Seite, in Bezug auf die Schwenkachse 36, ist ein Schwenkarm 37 angesetzt, der in der in Figur 7 gezeigten Stellung, in der die Oberseite 38 des Adapterteils 31 in der Ebene der Oberseite 34 des Trägers 32 bzw. in der Ebene der Bodenfläche 6 der Aufnahmemulde 2 ausgerichtet ist, an dem Bedienungshebel 14 aufliegt. Das Adapterteil 31 wird in dieser Stellung entgegen der Kraft zweier Adapterteil-Federelemente 39 in Form von Spiralfedern über den Bedienungshebel 14 gehalten. In dem Adapterteil 31 sind zwei Kontaktstifte 40 vorgesehen, die elektrisch mit einem Versorgungskabel 41 verbunden sind, das wiederum an das Bordnetz, z.B. eines Kraftfahrzeugs, angeschlossen ist. Mit einem Einsetzen des Handtelefons 10 in die Anordnung 1 derart, wie dies vorstehend anhand der Figur 1 beschrieben ist, wird, ausgehend von der Stellung, in der der Bedienungshebel 14 in der Lösestellung ausgerichtet ist und dabei gegen den Schwenkarm 36 des Adapterteils 31 anschlägt und dieses in der Freigabeposition entgegen der Kraft der Spiralfedern 39 hält (siehe Figur 7), der Bedienungshebel in die Verriegelungsstellung verschwenkt, wobei er den Schwenkarm 37 des Adapterteils 31 freigibt, so daß sich das Adapterteil 31 um die Schwenkachse 36 aufgrund der Wirkung der Spiralfeder 39 so verschwenkt, daß die Kontaktstifte 40 in die entsprechenden Anschlußbuchsen 29 an dem Handtelefon 10 eingreifen und die elektrische Verbindung herstellen.

Wie die Figuren 7 und 8 zeigen, wird ein elektrischer Anschluß des Handtelefons 10 an das Bordnetz eines Kraftfahrzeugs vorgenommen, ohne daß hierzu besondere Handhabungsmaßnahmen durch den Benutzer des Geräts 10 erfolgen müssen; gleiches gilt für das Abkoppeln des Adapterteils 31 von dem Handtelefon 10, wenn das Handtelefon 10 aus der Anordnung 1 entnommen wird, wofür der Schwenkarm 37 vorgesehen ist.

## Patentansprüche

1. Aufhäng- und Halteanordnung (1) für ein tragbares Hand-Funkkommunikationsgerät, insbesondere für ein Handtelefon, mit einer Aufnahmemulde (2), die durch etwa senkrecht zur Bodenfläche verlaufende Seitenwände (3, 4, 5) begrenzt ist, und mit einer Verriegelungseinrichtung, die einen in die Mulde vorspringenden Verriegelungszapfen (12) und einen mit dem Verriegelungszapfen verbundenen Bedienungshebel (14) aufweist, wobei der Bedienungshebel derart schwenkbar ist, daß er den Verriegelungszapfen zwischen einer Verriegelungsstellung und einer Lösestellung verschiebt, dadurch gekennzeichnet, daß die Aufnahme-Mulde (2) auf drei Seiten durch Seitenwände (3, 4, 5) begrenzt ist und auf der Seite, auf der der Bedienungshebel (14) vorsteht, offen ist, und daß die Seitenwände (3, 4, 5) mindestens teilweise an ihren freien Enden übergreifende Vorsprünge (9) aufweisen, die die Öffnungsweite der Mulde (2) verringern.

2. Aufhäng- und Halteanordnung nach Anspruch 1, dadurch gekennzeichnet, daß die übergreifenden Vorsprünge (9) die Seitenwände (3, 4, 5) umlaufend begrenzen.

3. Aufhäng- und Halteanordnung nach Anspruch 1 oder 2, dadurch gekennzeichnet, daß die übergreifenden Vorsprünge (9) an ihrer der Bodenfläche (6) zugewandten Seite Führungsflächen aufweisen, die in einer Ebene etwa parallel zur Ebene der Bodenfläche (6) der Mulde (2) verlaufen.

4. Aufhäng- und Halteanordnung nach Anspruch 3, dadurch gekennzeichnet, daß die Seitenwand (4), die der Öffnung (8) gegenüberliegt, eine Antennendurchführung (26) in Form einer Aussparung (26) aufweist.

5. Aufhäng- und Halteanordnung nach einem der Ansprüche 1 bis 4, dadurch gekennzeichnet, daß in der Bodenfläche (6) der Mulde (2) Befestigungsöffnungen (7) vorgesehen sind.

6. Aufhäng- und Halteanordnung nach einem der Ansprüche 1 bis 5, dadurch gekennzeichnet, daß der Bedienungshebel (14) ein Flächenelement ist, das zu der durch die Rückseite der Bodenfläche (6) der Mulde (2) aufgespannten Fläche, die die Befestigungsfläche bildet, hin gewölbt ist.

7. Aufhäng- und Halteanordnung nach einem der Ansprüche 1 bis 6, dadurch gekennzeichnet, daß die Lagerung des Bedienungshebels (14) in der Anordnung (1) mittels zapfenförmigen Lagerteilen (16) erfolgt, die in entsprechende Lagerausnehmungen (17) eingreifen.

8. Aufhäng- und Halteanordnung nach Anspruch 7, dadurch gekennzeichnet, daß die Lagerung des Bedienungshebels (14) mittels zweier Zapfen (16) erfolgt, die an dem Bedienungshebel (14) angeordnet sind und die in Lagerausnehmungen (17) in den Seitenwänden (3, 5), die die offene Seite (8) der Mulde begrenzen, eingreifen.

9. Aufhäng- und Halteanordnung nach Anspruch 8, dadurch gekennzeichnet, daß die Lagerausnehmungen gekrümmte Nuten (17) sind mit einem von der Stirnseite (18) der Seitenwand (3, 5) ausgehenden offenen Einführende (19) und einem Endbereich (21), der etwa senkrecht zu der Bodenfläche (6) der Mulde (2) verläuft, wobei die Zapfen (16) in den Endbereichen (21) der jeweiligen Nuten (17) mittels Federkraft gehalten sind.

10. Aufhäng- und Halteanordnung nach Anspruch 9, dadurch gekennzeichnet, daß die Federkraft durch eine Feder gebildet ist, die an der Unterseite des Bedienungshebels (14) an einem sich von der Schwenkachse (15) des Hebels (14) aus gesehen in die Mulde (2) erstreckenden Bereich angreift.

11. Aufhäng- und Halteanordnung nach Anspruch 10, dadurch gekennzeichnet, daß die Feder an dem Verriegelungszapfen (12) angreift.

12. Aufhäng- und Halteanordnung nach Anspruch 10, dadurch gekennzeichnet, daß die Feder eine Spiralfeder ist, die über einen Haltezapfen (22) an dem Bedienungshebel (14) und/oder der Bodenfläche (6) der Mulde (2) aufgesteckt gehalten ist.

13. Aufhäng- und Halteanordnung nach einem der Ansprüche 1 bis 12, dadurch gekennzeichnet, daß im Bereich der offenen Seite der Aufnahme-Mulde (2) eine Versorgungsanordnung (30) mit einem bewegbaren Adapterteil (31) angeordnet ist, das mit einem oder mehreren elektrischen Kontaktteilen (40) versehen ist, wobei dieses Adapterteil (31) in der Verriegelungsstellung des Bedienungshebels (14) in eine Kontaktierungsstellung überführt ist.

14. Aufhäng- und Halteanordnung nach Anspruch 13, dadurch gekennzeichnet, daß das Adapterteil (31) in die Kontaktierungsstellung durch eine Federkraft (39) überführt und gehalten wird.

15. Aufhäng- und Halteanordnung nach einem der Ansprüche 13 oder 14, dadurch gekennzeichnet, daß das Adapterteil (31) aus der Kontaktierungsstellung in eine Freigabeposition durch Verschieben des Bedienungshebels (14) von der Verriegelungsstellung zu der Lösestellung freigegeben wird.

16. Aufhäng- und Halteanordnung nach Anspruch 15, dadurch gekennzeichnet, daß unter Verschieben des Bedienungshebels (14) von der Verriegelungsstellung zu der Lösestellung der Bedienungshebel (14) in einen Schwenkarm (37) des Adapterteils (31) eingreift und diesen in die Freigabeposition verschwenkt.

## Claims

1. A suspension and holding device for a portable handheld radio communication unit, especially for a hand-held telephone, comprising a receiving cavity which is defined by side walls extending in a direction which is approximately perpendicular to a bottom surface, and a locking device which includes a locking pin projecting into said cavity and an operating lever connected to said locking pin, said operating lever being pivotable in such a manner that it moves said locking pin between a locking position and an unlocked position, characterized in that said receiving cavity (2) is defined by side walls (3, 4, 5) on three sides and is open at the side at which said operating lever (14) projects, and that said side walls (3, 4, 5) have projections (9) which protrude at least partly at the free ends thereof and reduce the opening width of said cavity (2).

2. A suspension and holding device according to claim 1, characterized in that said overlapping projections (9) surroundingly define said side walls (3, 4, 5).

3. A suspension and holding device according to claim 1 or 2, characterized in that said overlapping projections (9) are provided at their side facing said bottom surface (6) with guide surfaces which extend in a plane approximately in parallel with the plane of the bottom surface (6) of said cavity (2).

4. A suspension and holding devide according to claim 3, characterized in that said side wall (4) which is opposite to opening (8) has an antenna passage (26) shaped in the form of a recess (26).

5. A suspension and holding device according to any one of claims 1 to 4, characterized in that securing openings (7) are provided in the bottom surface (6) of said cavity (2).

6. A suspension and holding device according to any one of claims 1 to 5, characterized in that said operating lever (14) is a flat element which is curved towards the surface which is formed by the rear side of the bottom surface (6) of said cavity (2) and forms the securing surface.

7. A suspension and holding device according to any of claims 1 to 6, characterized in that said operating lever (14) is suppported in said device (1) by means of pin-like support members (16) which engage into corresponding support recesses (17).

8. A suspension and holding device according to claim 7, characterized in that said operating lever (14) is supported by means of two pins (16) which are arranged on said operating lever (14) and engage into suppport recesses (17) provided in said side walls (3, 5) which define the open side (8) of said cavity.

9. A suspension and holding device according to claim 8, characterized in that said support recesses are curved grooves (17) having an insertion end (19) starting form the front side (18) of said side wall (3, 5), and an end portion (21) which extends in a direction approximately perpendicular to the bottom surface (6) of said cavity (2), said pins (16) being held in the end portions (21) of the respective grooves (17) by a spring force.

10. A suspension and holding device according to claim 9, characterized in that said spring force is formed by a spring which at the bottom side of said operating lever (14) acts on a portion extending into said cavity (2) when being viewed from the pivot axis (15) of said lever (14).

11. A suspension and holding device according to claim 10, characterized in that said spring acts on said locking pin (12).

12. A suspension and holding device according to claim 10, characterized in that said spring is a spiral spring which is held by means of a holding pin (22) on said operating lever (14) and/or the bottom surface (6) of said cavity (2) in attached fashion.

13. A suspension and holding device according to any of claims 1 to 12, characterized in that in the area of the open side of said receiving cavity (2) a supply assembly (30) is arranged with a movable adapter member (31) which is provided with one or a plurality of electric contact members (40), said adapter member (31) being transferred into a contacting position in the locking position of said operating lever (14).

14. A suspension and holding device according to claim 13, characterized in that said adapter member (31) is transferred into and held in said contacting position by a spring means (39).

15. A suspension and holding device according to any of claims 13 or 14, characterized in that said adapter member (31) is released from said contacting position into a release position by moving said operating lever (14) from said locking position to said unlocked position.

16. A suspension and holding device according to claim 15, characterized in that when said operating lever (14) is moved from said locking position to said unlocked position, said opeating lever (14) engages into a pivot arm (37) of said adapter member (31) and pivots said member into said release position.

## Revendications

1. Dispositif de suspension et maintien pour un appareil à main de radiocommunication portable, en particulier pour un téléphone portable, avec un enfoncement de logement qui est limité par des parois latérales qui sont à peu près perpendiculaires à la surface du fond et avec un dispositif de verrouillage qui présente un tourillon de verrouillage qui fait saillie dans l'enfoncement et un levier de manoeuvre relié au tourillon de verrouillage, le levier de manoeuvre étant pivotable de telle maniére qu'il déplace le tourillon de manoeuvre entre une position de verrouillage et une position de déblocage, caractérisé en ce que l'enfoncement de logement (2) est limité sur trois côtés par des parois latérales (3, 4, 5) et est ouvert sur le côté sur laquel le levier de manoeuvre (14) fait saillie et que les parois latérales (3, 4, 5) présentent, au moins partiellement à leurs extrémités libres, des parties en saillie (9) qui recouvrent qui limitent la largeur de l'ouverture de l'enfoncement (2).

2. Dispositif de suspension et maintien selon la revendication 1, caractérisé en ce que les parties en saillie qui recouvrent (9) limitent les parois latérales (3, 4, 5) sur le pourtour.

3. Dispositif de suspension et maintien selon la revendication 1 ou 2, caractérisé en ce que les parties en saillie qui recouvrent (9) présentent, sur leur côté tourné vers la surface du fond (6), des surfaces de guidage qui sont dans un plan à peu près parallele au plan de la surface du fond (6) de l'enfoncement (2).

4. Dispositif de suspension et maintien selon la revendication 3, caractérisé en ce que la paroi latérale (4), qui est en face de l'ouverture (8), pr'sente un passage d'antenne (26) en forme d'évidement (26).

5. Dispositif de suspension et maintien selon l'une des revendications 1 à 4, caractérisé en ce que des ouvertures de fixation (7) sont prévues dans la surface du fond (6) de l'enfoncement (2).

6. Dispositif de suspension et maintien selon l'une des revendications 1 à 5, caractérisé en ce que le levier de commande (14) est un élément à surface qui est vôuté vers la surface qui est tendue par le dos de la surface du fond (6) de l'enfoncement (2) qui forme la surface de fixation.

7. Dispositif de suspension et maintien selon l'une des revendications 1 à 6, caractérisé en ce que le logement du levier de manoeuvre (14) dans le dispositif (1) se fait au moyen de parties de palier (16) en forme de tourillons qui s'engrènent dans des évidements de palier (17) correspondants.

8. Dispositif de suspension et maintien selon la revendication 7, caractérisé en ce que le logement du levier de manoeuvre (14) se fait au moyen de deux tourillons (16) qui sont placés sur le levier de manoeuvre (14) et qui s'engrènent dans des évidements de palier (17) dans les parois latérales (3, 5) qui délimitent le côté ouvert (8) de l'enfoncement.

9. Dispositif de suspension et maintien selon la revendication 8, caractérisé en ce que les évidements de palier sont des rainures courbées (17) avec une extrémité d'introduction (19) ouverte qui part de la face frontale (18) de la paroi latérale (3, 5) et avec une zone d'éxtrémité (21) qui est à peu près perpendiculaire à la surface du fond (6) de l'enfoncement (2), les tourillons (16) étant maintenus dans les zones d'extrémité (21) des rainures respectives (17) par retour élastique.

10. Dispositif de suspension et maintien selon la revendication 9, caractérisé en ce que le retour élastique est formé par un ressort qui agit sur la face inférieure de levier de manoeuvre (14) sur une zone qui s'étend dans l'enfoncement (2), ceci étant vu à partir de l'axe de pivotement (15) du levier (14).

11. Dispositif de suspension et maintien selon la revendication 10, caractérisé en ce que le ressort agit sur le tourillon de verrouillage (12).

12. Dispositif de suspension et maintien selon la revendication 10, caractérisé en ce que le ressort est un ressort spiral qui est maintenu rapporté sur le levier de manoeuvre (14) et/our la surface de fond (6) de l'enfoncement (2) par un tourillon de maintien (22).

13. Dispositif de suspension et maintien selon l'une des revendications 1 à 12, caractérisé en ce qu'un dispositif d'alimentation (30) est placé dans la zone du côté ouvert de l'enfoncement de logement (2) avec une partie adaptateur mobile (31) qui est pourvui d'un ou de plusieurs pieces de contact électrique (40), cette partie adaptateur (31) en position de verrouillage du levier de manoeuvre (14) étant déplacée dans une position de mise en contact.

14. Dispositif de suspension et maintien selon la revendication 13, caractérisé en ce que la partie adaptateur (31) est déplacée dans la posiiton de mise en contact et est maintenue par un retour élastique (39).

15. Dispositif de suspension et maintien selon l'une des revendication 13 ou 14, caractérisé en ce que la partie adaptateur (31) est dégagée de la position de mise en contact en une position de déblocage par le déplacement du levier de manoeuvre (14) de la position de verrouillage à la position de déblocage.

16. Dispositif de suspension et maintien selon la revendication 15, caractérisé en ce qu'en déplacant le levier de manoeuvre (14) de la position de verrouillage à la position de déblocage, le levier de manoeuvre (14) s'engrène dans un bras pivotant (37) de la partie adaptateur (31) et pivote celui-ci dans la position de deblocage.
